# EUROPEAN PATENT APPLICATION

(11) **EP 0 855 790 A2**
(43) Date of publication of application: **29.07.1998**
(21) Application number: 98100804.8
(22) Date of filing: 19.01.1998
(51) Int. Cl.: H02M 7/06

(54) **An AC-DC converter for low power electronic switching motors fed by a power grid**

(30) Priority: 24.01.1997 IT TO970049
(71) Applicant: BITRON S.p.A., 10064 Pinerolo (Torino) (IT)
(72) Inventor: Defilippis, Pietro, 20052 Monza (MI) (IT)
(74) Representative: Fioravanti, Corrado

(57) **Abstract**

An AC-DC converter for low power electronic switching motors fed by a power grid comprises a first capacitor (Cₐ) in series with a feeding line, with a resistor (Rₚ) in series as a protection means against current overloads due to the closing of a switch (I). A rectifier bridge feeds, through a second filter capacitor (C_{L}), both the control electronics (E_{c}) and the motor or load (MCE, C). A third capacitor (C_{AL}) is connected in parallel to the control electronics (E_{c}). One end of a first diode (D₂) is connected between one end of the filter capacitor (C_{L}) and one end of the third capacitor (C_{AL}). The other end of the first diode (D₂) is connected to one end of a second diode (D₁); the other end of the second diode is placed between the second end of the third capacitor (C_{AL}) and one of the ends of the rectifier bridge.

## Description

The present invention relates to an AC-DC converter for high efficiency, self-protected, low power electronic switching motors, fed by the power grid.

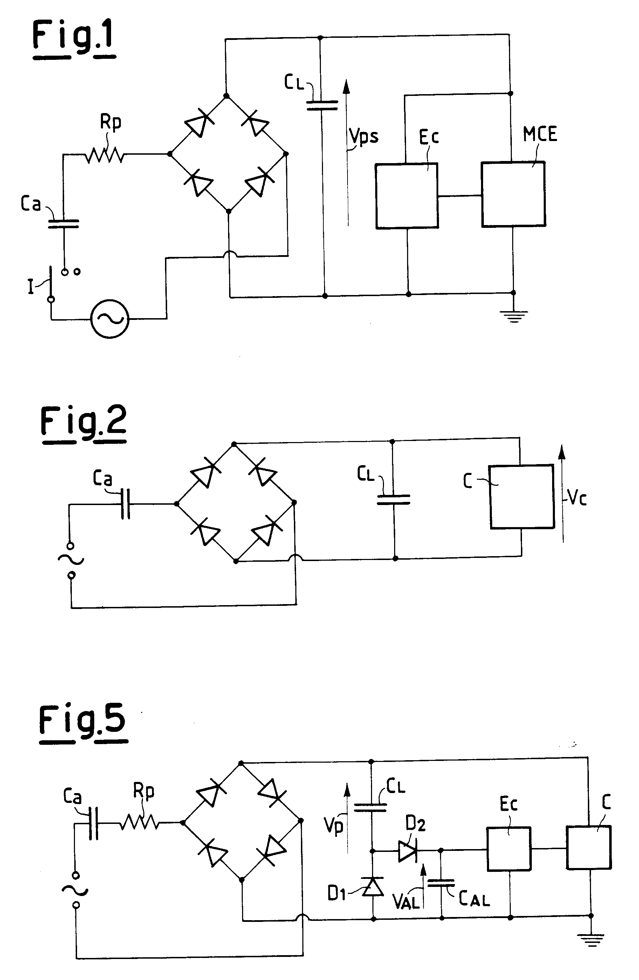

A feeding structure such as that illustrated in Fig. 1 is known for use in electronic switching electric motors, fed by a power grid (e.g., 220 V alternate current) and with a mechanic power yield of about 1W or less, with a requested high efficiency (power grid absorption of about 2W or less).

This solution is characterised in that it provides a capacitor Cₐ in series with the feeding line, with a resistor Rₚ in series as a protection means against the current overloads due to the closing of switch I. A rectifier bridge feeds, through filter capacitor C_{L}, a low voltage current (e.g., 12-24V) both to the control electronics E_{c} and to the motor MCE. However, such a circuit arrangement involves four problems:
1) costs
2) overall size
3) the control electronics complexity and reliability; and
4) the static torque as compared to the rated torque.

Problems 1) and 2) depend on the electric sizing of the capacitor Cₐ which is the converter most expensive component.

In fact, in the circuit of Fig. 1, being equal the level of performance and therefore of requested power, the motor is sized in order to operate at low voltage and therefore it will absorb a much higher current than a motor sized to operate at a higher voltage. For example, between a 10V feeding and a 100V feeding the ratio between requested currents is 10:1.

This involves, proportionally, much higher electric values and therefore much higher dimensional values and costs for the capacitor Cₐ which has to provide said current.

Problems 3) and 4) are originated by the fact that a limiting function of the maximum current absorbed by the motor at starting and with blocked rotor is required by the control electronics E_{c}. In fact, in the above conditions the motor (sized for high efficiency) has an impedance (only the winding impedance since there is no electromotive force) more than four times lower than in working conditions. Then, since the system is practically fed by constant current through the capacitor Cₐ, the voltage Vₚₛ would reach such a level that would jeopardise the proper operation of the control electronics Ec fed by the same voltage. This current limitation at starting causes problem 4), i.e., static torque comparable with the nominal torque.

A typical use of the above mentioned device is in refrigerators in two appplications as electric fan, known as NO-FROST for cooling of a condenser of the refrigeration system.

The object of the invention is to provide a circuit arrangement which solves the mentioned problems and adds, to the arrangement of Fig. 1, an additional circuit to attain multiple speeds for the motor, by using switches which can work directly with the high voltage feeding, and to ensure both high efficiency under all conditions and no need for additional speed control circuits and expensive interfaces with the control electronics E_{c}.

In order to achieve these and further objects which will be better understood hereinafter, there is provided, in accordance with the present invention an AC-DC converter for low power electronic switching motors fed by a power grid, of the type comprising a first capacitor in series with the feeding line, with a resistor in series as a protection means against current overloads due to the closing of a switch; a rectifier bridge feeding, through a second filter capacitor, both the control electronics and the motor or load; characterised in that a third capacitor is connected in parallel to said control electronics; one end of a first diode being connected between one end of the filter capacitor and one end of said third capacitor; the other end of the first diode being connected to one end of a second diode, the other end of said second diode being placed between the second end of the third capacitor and one of the ends of the rectifier bridge.

The converter will now be described making reference to the attached drawings, in which:
- Fig. 1: is an electric diagram of a known feeding line;
- Fig. 2: is an electric diagram of a simplified and partial embodiment of the feeding line according to the invention;
- Figs. 3, 4, 6 and 7: are diagrams of characteristics of the feeding circuit;
- Fig. 5: is an electric diagram of the general structure of the feeding line according to the invention;
- Figs. 9 and 10: show two alternative solutions to the one of Fig. 8.

In order to solve the above mentioned problems 1) as to costs and 2) as to the overall size, first there has been studied the impedance match of a load C (the motor) whereby being equal the value Cₐ, the load C provides the maximum active power obtainable from the feeding line (Fig. 2).

A non-limiting test has been carried out at an effective feeding voltage from the power grid of 220 V, at 314 V peak.

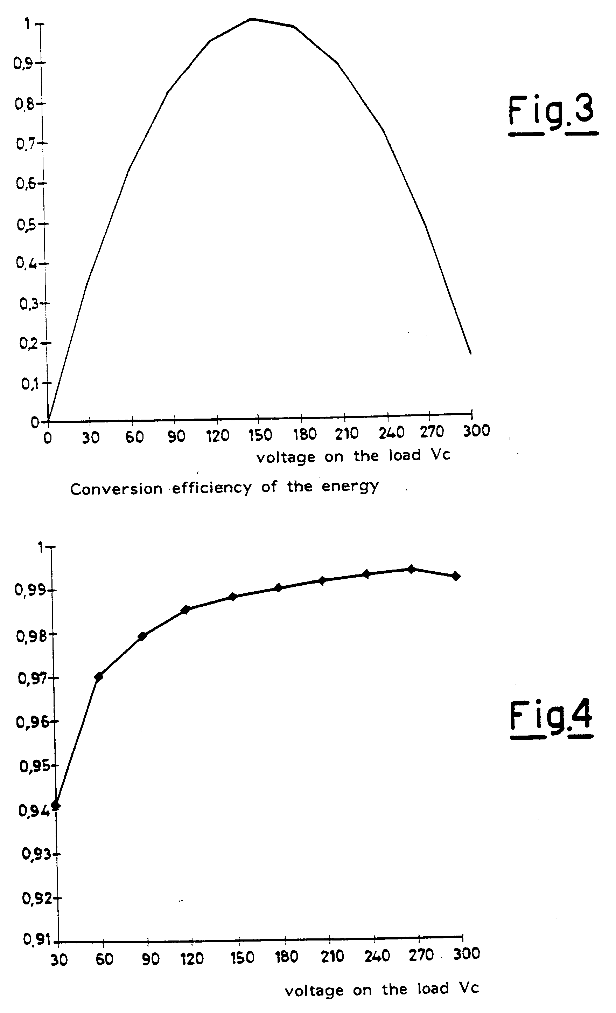

Fig. 3 shows that the maximum power transfer will be reached with a load having such an impedance that at a given Cₐ the voltage V_{c} at the ends thereof is about half the value of the feeding voltage peak. From FIG. 4 there can be further noticed an improved level of conversion efficiency for this converter when V_{c} is at "high voltage" values rather than "low voltage" values (less then 30V) at which the conventional structure of Figure 1 operates.

At equal level of performance, the industrial cost of an electric motor grows proportionally to the feeding voltage increase for which the motor is dimensioned. In fact, this increase, as known, causes an increase in the number of coils and a reduction of the wire diameter. Both these two requirements will negatively affect costs, especially in the low voltage range of the present case.

In view of the foregoing, the motor will be dimensioned in such manner that at the maximum required power it will work at about half the value of the feeding voltage peak and if the motor is required to work at multiple speeds (as shown hereinafter) it will work at V_{c} values always lower than the above indicated value. Operating at 150V as working point, the motor will have the advantage, at the starting point, of having a doubled value of current and torque with respect to the working value. Consequently, problem 4) is overcome.

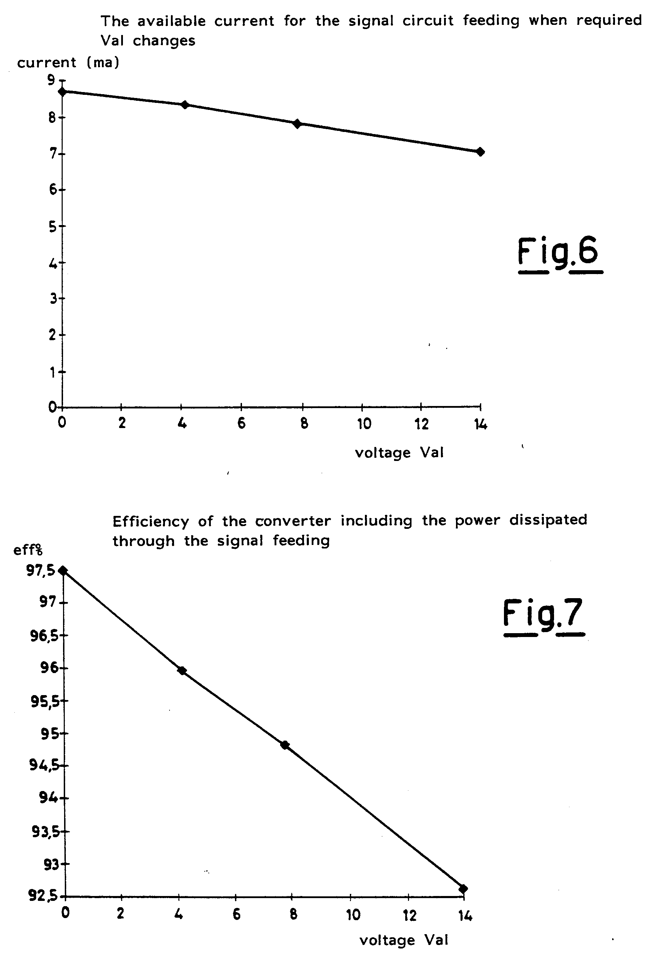

In order to solve problem 3) concerning the control electronics feeding, the invention provides the circuit of Fig. 5, which represents an evolution of the one in Fig. 2. It is easy to demonstrate that in the field of said powers there is a "concurrence of favourable factors" for the proposed invention whereby the invention becomes extremely efficient in converting power and in providing, under all the required working conditions, the voltage and the power required by the control electronics circuit, without any kind of interference with the motor feeding (load C).

Operation is self-explaining with the alternative components of the current in C_{L} (which is loaded by Cₐ and downloads on load C). Such components are rectified into a half wave by D₂, while D₁ supplies the feeding to load C during the downloads of C₂.

To better explain the meaning of the expression "concurrence of favourable factors" it should be noted that for a typical 220V application and active power fed by the power grid slightly exceeding 2 W, the capacitor Cₐ is 0,47 µF and the motor works at V_{c} of about 120V, supplying about 1W to the shaft. At a value of C_{L} equal to 10 µF and C_{AL} equal to 47 µF (non critical values but which effect only the ripple on the corresponding voltages at the ends thereof) about 8 mA are obtained at a value of V_{AL} equal to about 8V.

Taking also into account that the feeding voltage V_{AL} must be present even at considerably reduced values of the line voltage, but that the electronics control requires about 8V and only 4 mA, the meaning of "concurrence of favourable factors", is now clear since the sizing for the optimal use of the "power" circuit (feeding of load C) automatically yields, with the circuit of this invention, a very high efficiency feeding V_{AL} at minimum costs and with a minimum number of components. This also provides for an increased reliability.

To confirm the above mentioned features, Figures 6 and 7 show typical data for the cited sizing, concerning either the available current for the signal circuit feeding when the required V_{AL} changes, and the effect of this choice on the converter global efficiency, including in its losses the power dissipated through the signal feeding.

It comes that it is convenient to work at the minimum values of V_{AL} necessary to operate the control circuit and control the power components (e.g., MOSFETs). A typical value can be of about 8V.

In the list of "favourable factors" associated with the proposed circuit and the specific sizing of its components (including the "impedance arrangement" whereby the motor is sized) it has to be mentioned that the V_{AL} feeding is protected without additional circuits, even when the motor is at the starting point or in the locked rotor position. In fact, a motor sized according to the above criteria within the mentioned power range, will have a winding resistance exceeding 1,000 Ohm which assures, in the blocked rotor position, a voltage V_{c}, at the respective ends of the motor, sufficiently higher than V_{AL}. Therefore, it can be shown that even in these conditions V_{AL} is adequate to operate the system.

Diode D1 can preferably be a Zener diode whereby the maximum voltage for the electronics control (E_{c}) is automatically defined, with a voltage value equal to the value required by the electronics E_{c}, for instance V.

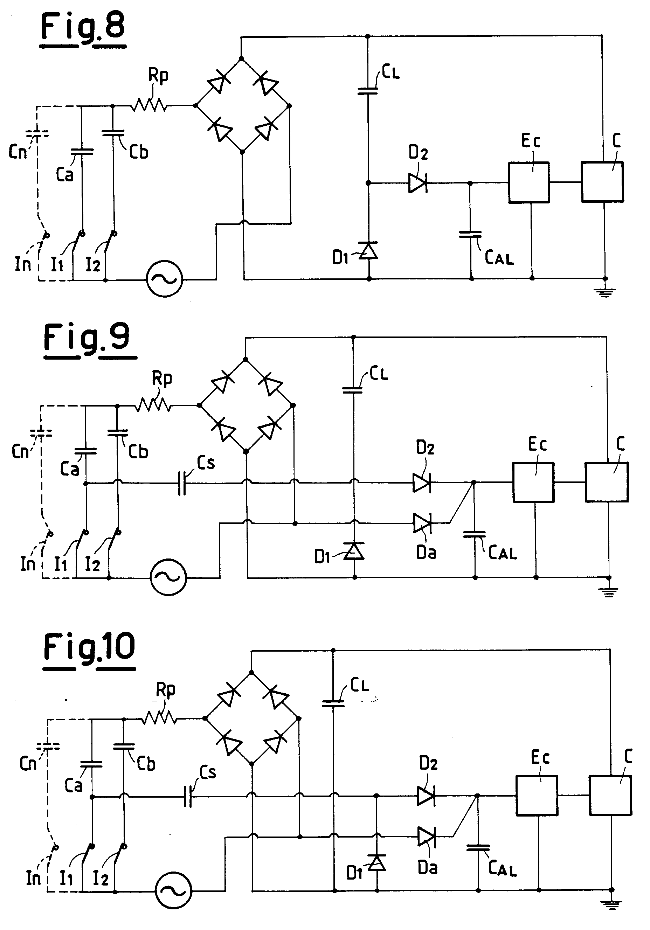

A further advantageous characteristic of the invention is that it satisfies the requirement of having the possibility to control the motor at multiple speeds without jeopardising its cost competitiveness objects and the high efficiency of the converter. Fig. 8, showing the invention in its entirety, points out that the object of the invention is achieved through a series of switches I₁, I₂,...I_{n,} which, by adding other capacitors in parallel to Cₐ, automatically increase the feeding current and therefore the power produced by the motor.

In this case the sizing of said capacitors and of the motor has to be carried out in order that, with all the capacitors in parallel, the motor operates at a (power) V equal to 150Vmax and that, with just one capacitor, operation of the signal feeding is not jeopardised.

Typical applications show two switches involving two feeding systems for the engine, one at 100 V and the other at 150 V. In any case, the limiting resistance Rₚ is in series to all the capacitors.

Alternative solutions are possible to feed the signal electronics E_{c} in order to separate partially or fully the signal electronics feeding from the power feeding. Fig. 9 shows the partial separation case, while Fig 10 shows the full separation case. As apparent, however, these two solutions need an additional diode Dₐ and a high voltage capacitor Cₛ which, compared to the arrangement of Fig. 8, adversely affect the costs and which should be utilised only outside the operational limits reported in the diagram of Fig. 8.

## Claims

1. An AC-DC converter for low power electronic switching motors fed by a power grid, of the type comprising a first capacitor (Cₐ) in series with the feeding line, with a resistor (Rₚ) in series as a protection means against current overloads due to the closing of a switch (I); a rectifier bridge feeding, through a second filter capacitor (C_{L}), both the control electronics (E_{c}) and the motor or load (MCE, C); characterised in that a third capacitor (C_{AL}) is connected in parallel to said control electronics (E_{c}); one end of a first diode (D₂) being connected between one end of the filter capacitor (C_{L}) and one end of said third capacitor (C_{AL}); the other end of the first diode (D₂) being connected to one end of a second diode (D₁), the other end of said second diode being placed between the second end of the third capacitor (C_{AL}) and one of the ends of the rectifier bridge.

2. A converter according to claim 1, characterised in that the second diode (D1) is a Zener diode.

3. A converter according to claim 1, characterised in that one of the ends of the switch (I) is connected through a capacitor (Cₛ) to one of the ends of the first diode (D₂); a third diode (Dₐ) being placed between one of the ends of the rectifier bridge and the other end of said first diode (D₂).

4. A converter according to claim 3, characterised in that said filter capacitor (C_{L}) is connected in parallel to said load (MCE, C).

5. A converter according to any of the preceding claims, characterised in that there is provided a plurality of switches (I₁, I₂,...Iₙ) connected through a plurality of said first capacitors (Cₐ, C_{b},...Cₙ) to said resistance (Rₚ).
